# EUROPEAN PATENT APPLICATION

(11) **EP 4 811 400 A1**
(43) Date of publication of application: **23.09.2026**
(21) Application number: 24891463.2
(22) Date of filing: 14.11.2024
(51) Int. Cl.: H01B 13/00, H01B 1/06, H01B 1/10, H01M 4/62, H01M 6/18, H01M 10/0562

(54) **SULFIDE SOLID ELECTROLYTE PRODUCTION METHOD**

(30) Priority: 15.11.2023 JP 2023194717
(71) Applicant: Mitsui Kinzoku Company, Limited, Tokyo 141-8584 (JP)
(72) Inventor: MIKI, Joji, Tokyo 141-8584 (JP)
(74) Representative: Novagraaf Technologies
(86) International application number: PCT/JP2024/040457
(87) International publication number: WO 2025/105427

(57) **Abstract**

A production method of the invention is a method for producing a sulfide solid electrolyte by using a raw material composition containing lithium (Li), phosphorus (P) and sulfur (S) elements. The raw material composition contains one or more sulfur-containing components containing sulfur (S) element, and one or more sulfur-free components not containing sulfur (S) element. D₁ is equal to or less than 5.0×D₂, where D₁ is a volume cumulative particle diameter D₅₀ at a cumulative volume of 50 vol% of at least one of the sulfur-containing components, the volume cumulative particle diameter D₅₀ of the sulfur-containing component being measured by a laser diffraction/scattering particle size distribution measurement method, and D₂ is a volume cumulative particle diameter D₅₀ at a cumulative volume of 50 vol% of at least one of the sulfur-free components, the volume cumulative particle diameter D₅₀ of the sulfur-free component being measured by a laser diffraction/scattering particle size distribution measurement method. The volume cumulative particle diameter D₅₀ of at least one of the sulfur-containing components is 50 µm or less.

## Description

### Technical Field

The present invention relates to a method for producing a sulfide solid electrolyte.

### Background Art

In recent years, secondary batteries have been attracting attention as an effort to prevent global warming by reducing CO₂ emissions. Among them, solid-state batteries using a solid electrolyte are expected to be put into practical use as batteries that combine safety and durability.

In order to realize solid-state batteries, the development of solid electrolytes is being actively pursued. For example, Patent Literature 1 proposes a method for producing a sulfide solid electrolyte by mixing raw materials that have been pulverized in advance so that the volume-based average particle diameter is 20 µm or less, and then performing heat treatment. The document also states that the method described in the document makes it possible to produce a sulfide solid electrolyte in a shorter time than conventional methods.

Patent Literature 2 proposes a method for producing a solid electrolyte by synthesizing a complex using lithium sulfide having an average particle diameter of from 0.1 to 300 µm and then heating the complex. The document also states that the method described in the document makes it possible to produce a solid electrolyte with high ionic conductivity.

### Citation List

### Patent Literature

Patent Literature 1: JP 2018-206611 A
Patent Literature 2: US2022/0336848 A1

### Summary of Invention

A solid electrolyte is required to have ionic conduction properties comparable to that of an electrolytic solution. However, the methods described in Patent Literatures 1 and 2 do not easily produce a solid electrolyte having ionic conduction properties high enough to obtain a solid-state battery that can exhibit sufficient performance for practical use.
Therefore, an objective of the present invention is to provide a method capable of easily producing a solid electrolyte having high ionic conduction properties.

The present invention achieves the above objective by providing a method for producing a sulfide solid electrolyte by using a raw material composition containing lithium (Li), phosphorus (P) and sulfur (S) elements, wherein:
the raw material composition contains
   one or more sulfur-containing components containing sulfur (S) element, and
   one or more sulfur-free components not containing sulfur (S) element;
D₁ is equal to or less than 5.0×D₂, where
D₁ is a volume cumulative particle diameter D₅₀ at a cumulative volume of 50 vol% of at least one of the sulfur-containing components, the volume cumulative particle diameter D₅₀ of the sulfur-containing component being measured by a laser diffraction/scattering particle size distribution measurement method, and
D₂ is a volume cumulative particle diameter D₅₀ at a cumulative volume of 50 vol% of at least one of the sulfur-free components, the volume cumulative particle diameter D₅₀ of the sulfur-free component being measured by a laser diffraction/scattering particle size distribution measurement method; and
the volume cumulative particle diameter D₅₀ of at least one of the sulfur-containing components is 50 µm or less.

### Description of Embodiments

The present invention will be described below based on its preferred embodiments. The present invention relates to a method for producing a solid electrolyte. The solid electrolyte that is the object of the production method of the present invention preferably contains at least lithium (Li), phosphorus (P) and sulfur (S) elements. In other words, the solid electrolyte that is the object of the production method of the present invention is a sulfide solid electrolyte.

The sulfide solid electrolyte, which is the object of the production method of the present invention, may contain other elements in addition to the elements Li, P, and S. Examples of other elements include various halogen elements, such as chlorine (Cl), bromine (Br) and iodine (I), and other elements, such as iron (Fe), zinc (Zn), germanium (Ge), lead (Pb), carbon (C), nitrogen (N) and oxygen (O).

The production method of the present invention uses a raw material composition containing the elements Li, P, and S. Specifically, the production method of the present invention is roughly divided into the following steps (1) to (4).

Step (1): A step of preparing sulfur-containing component(s) and sulfur-free component(s).

Step (2): A step of mixing the sulfur-containing component(s) and the sulfur-free component(s) to prepare a raw material composition.

Step (3): A step of firing the raw material composition to obtain a fired product.

Step (4): A step of pulverizing the fired product.

Steps (1), (2), (3) and (4) are carried out in this order. After completion of step (4), a step of sieving the pulverized fired product may be carried out as necessary. In addition, additional steps may be carried out between steps (1) and (2), between steps (2) and (3) and/or between steps (3) and (4) as necessary.

The steps (1) to (4) will be described below.

### Step (1):

In this step, a sulfur-containing component is prepared. Also in this step, a sulfur-free component is prepared.

The sulfur-containing component is made of a substance containing an S element. However, the sulfur-containing component may contain other elements in addition to the S element. Examples of the other elements include one, or a combination of two or more types of, Li, P, Fe, Zn, Ge, Pb, and O elements. Therefore, the sulfur-containing component can be an S element source, an Li element source, a P element source, an Fe element source, a Zn element source, a Ge element source, a Pb element source, and an O element source in the raw material composition prepared in the step (2) described below.

Depending on the type of intended sulfide solid electrolyte, the sulfur-containing component may be a single type or a plurality of types.

Examples of sulfur-containing components that can be used include lithium sulfide (Li₂S), phosphorus pentasulfide (P₂S₅), iron (II) sulfide (FeS), iron (III) sulfide (Fe₂S₃), zinc sulfide (ZnS), germanium sulfide (GeS), lead sulfide (PbS), and lithium sulfate (Li₂SO₄). Of these, Li₂S can be used as an S element source and an Li element source. P₂S₅ can be used as an S element source and a P element source. FeS and Fe₂S₃ can be used as an S element source and an Fe element source. ZnS can be used as an S element source and a Zn element source. GeS can be used as an S element source and a Ge element source. PbS can be used as an S element source and a Pb element source. Li₂SO₄ can be used as an Li element source, an S element source, and an O element source.

The sulfur-free component is made of a substance that does not contain an S element. The sulfur-free component is made of a compound containing other element(s) other than an S element. Examples of other elements include one, or a combination of two or more types of: Li element; various halogen elements such as Cl element, Br element, and I element; C element; O element; P element; Fe element; N element; hydrogen (H) element, and the like. Therefore, the sulfur-free component can be an Li element source, a Cl element source, a Br element source, an I element source, a C element source, an O element source, a P element source, an Fe element source, an N element source, an H element source, and the like in the raw material composition prepared in the step (2) described below.

Depending on the type of intended sulfide solid electrolyte, the sulfur-free component may be a single type or a plurality of types.

Examples of sulfur-free components include lithium chloride (LiCl), lithium bromide (LiBr), lithium iodide (LiI), lithium carbonate (Li₂CO₃), yellow phosphorus (P₄), red phosphorus (P), and phosphates. Examples of phosphates include lithium phosphate (Li₃PO₄), iron (III) phosphate (FePO₄), and ammonium hydrogen phosphate (NH₄)₂HPO₄. Of these, LiCl can be used as an Li element source and a Cl element source. LiBr can be used as an Li element source and a Br element source. LiI can be used as an Li element source and an I element source. Li₂CO₃ can be used as an Li element source, a C element source, and an O element source. P₄ and P can be used as a P element source. Li₃PO₄ can be used as an Li element source, a P element source, and an O element source. FePO₄ can be used as an Fe element source, a P element source, and an O element source. (NH₄)₂HPO₄ can be used as an N element source, an H element source, a P element source, and an O element source.

The production method of the present invention is a method for producing a sulfide solid electrolyte by using a sulfur-containing component and a sulfur-free component as starting materials, and one of its features is that the particle diameter of the sulfur-containing component and the particle diameter of the sulfur-free component have a predetermined relationship.

In order to improve the performance of solid-state batteries, sulfide solid electrolytes having high ionic conduction properties are required. However, as described in Patent Literatures 1 and 2, for example, it is not easy to produce a solid electrolyte having sufficiently high ionic conduction properties by simply adjusting the particle diameter of one starting material.

The Inventor has conducted extensive research into how to improve this point, and has unexpectedly found that a sulfide solid electrolyte having high ionic conduction properties can be produced by using, as starting materials for the sulfide solid electrolyte, a sulfur-containing component and a sulfur-free component having a specific particle diameter relationship. Moreover, the production method of the present invention does not require, for example, designing the compositional makeup of the sulfide solid electrolyte, which is the object of the production method, or using additives in order to improve the ionic conduction properties. Therefore, the production method of the present invention has an advantage that a solid electrolyte having high ionic conduction properties can be produced more easily than conventional production methods.

Specifically, in the production method of the present invention, it is preferable that D₁ is equal to or less than 5.0×D₂, where: D₁ is defined as the volume cumulative particle diameter D₅₀ at a cumulative volume of 50 vol% (hereinafter also simply referred to as "volume cumulative particle diameter D₅₀") of at least one of the sulfur-containing components, the volume cumulative particle diameter D₅₀ of the sulfur-containing component being measured by a laser diffraction/scattering particle size distribution measurement method; and D₂ is defined as the volume cumulative particle diameter D₅₀ at a cumulative volume of 50 vol% of at least one of the sulfur-free components, the volume cumulative particle diameter D₅₀ of the sulfur-free component being measured by a laser diffraction/scattering particle size distribution measurement method. This makes it possible to easily produce a sulfide solid electrolyte with high ionic conduction properties. From the viewpoint of making this advantage even more remarkable, the relationship between D₁ of at least one of the sulfur-containing components and D₂ of at least one of the sulfur-free components is such that, for example, D₁ is more preferably equal to or less than 4.0×D₂, further preferably equal to or less than 2.5×D₂, and even more preferably equal to or less than 1.0×D₂. From the viewpoint of making the above-mentioned advantage even more remarkable, it is preferable that the coefficient of D₂ is closer to 1.0, for example. The coefficient of D₂ is, for example, preferably equal to or more than 0.020, more preferably equal to or more than 0.025, and even more preferably equal to or more than 0.030. When the coefficient of D₂ is within the above range, the desired effect is sufficiently achieved.

The reason why such a relationship between D₁ and D₂ allows the production of a sulfide solid electrolyte with high ionic conduction properties is not completely clear, but the Inventor believes that it may be due to the following reason. Note, however, that the scope of the present invention is not limited to this theory. It is conceivable that this is due to the fact that, when D₁ of at least one of the sulfur-containing components is equal to or less than a predetermined value in relation to D₂ of at least one of the sulfur-free components, it is easier to form an Li-P-S skeletal structure when a solid-phase reaction occurs in step (3) described below, and also, the crystallization rate of an argyrodite-type crystal structure is increased due to efficient replacement of the sulfur-free components.

In order to achieve the above-mentioned relationship between D₁ and D₂ , it is preferable to use a combination of a sulfur-containing component and a sulfur-free component having predetermined particle diameters, to adjust the particle diameters of the sulfur-containing component and the sulfur-free component by, for example, pulverization, or to synthesize and use a sulfur-containing component having a predetermined particle diameter and a sulfur-free component having a predetermined particle diameter.

When there is only one type of sulfur-containing component and one type of sulfur-free component, D₁ and D₂ respectively refer to the volume cumulative particle diameter D₅₀ of the sulfur-containing component and the volume cumulative particle diameter D₅₀ of the sulfur-free component.

When the sulfur-containing component and the sulfur-free component are each a single type or a plurality of types, the relationship D₁ ≤ 5.0×D₂ is satisfied, where D₁ is defined as the volume cumulative particle diameter D₅₀ of the one type of sulfur-containing component or the volume cumulative particle diameter D₅₀ of any one sulfur-containing component arbitrarily selected from the plurality of types of sulfur-containing components, and D₂ is defined as the volume cumulative particle diameter D₅₀ of the one type of sulfur-free component or the volume cumulative particle diameter D₅₀ of any one sulfur-free component arbitrarily selected from the plurality of types of sulfur-free components. In this embodiment, for example, it is preferable to satisfy the relationship D₁ ≤ 4.0×D₂, and in particular, it is more preferable to satisfy the relationship D₁ ≤ 2.5×D₂, and it is further preferable to satisfy the relationship D₁ ≤ 1.0×D₂. However, when each of the sulfur-containing component and the sulfur-free component is present as only one type, the above relationship does not apply.

When the sulfur-containing component and the sulfur-free component are each a single type or a plurality of types, there may be a combination of the sulfur-containing component and the sulfur-free component that does not satisfy the above-mentioned relationship of D₁ and D₂. However, when each of the sulfur-containing component and the sulfur-free component is present as only one type, the above relationship does not apply.

When the sulfur-containing component and the sulfur-free component are each a single type or a plurality of types, the above-mentioned relationship of D₁ and D₂ may be satisfied in all combinations of one arbitrarily selected sulfur-containing component and one arbitrarily selected sulfur-free component. However, when each of the sulfur-containing component and the sulfur-free component is present as only one type, the above relationship does not apply.

Pulverization may be performed in a dry or wet manner. Various pulverization devices can be used for pulverization. Examples of pulverization devices that can be used include ball mills, bead mills, paint shakers, airflow pulverizers, homogenizers, rod mills, vibrating ball mills, planetary mills, and disk mills. Alternatively, pulverization can be performed in a mortar.

The sulfur-containing component preferably has a volume cumulative particle diameter D₅₀ equal to or less than a predetermined value. The Inventor believes that this makes it easier to form an Li-P-S skeletal structure when a solid-phase reaction occurs in step (3) described below, and also increases the crystallization rate of an argyrodite-type crystal structure due to efficient replacement of the sulfur-free components, and as a result, a sulfide solid electrolyte with high ionic conduction properties can be easily produced.

Specifically, at least one of the sulfur-containing components has a volume cumulative particle diameter D₅₀ of preferably 50 µm or less, more preferably 30 µm or less, and even more preferably 10 µm or less. The smaller the volume cumulative particle diameter D₅₀ of the sulfur-containing component, the more preferable. On the other hand, the volume cumulative particle diameter D₅₀ may be, for example, 1.0 µm or more, 2.0 µm or more, or 3.0 µm or more.

In addition, it is preferable that at least one of the sulfur-containing components has a volume cumulative particle diameter D₅₀ within the above range, and it is more preferable that all of the sulfur-containing components have a volume cumulative particle diameter D₅₀ within the above range, because this can further improve the ionic conduction properties of the sulfide solid electrolyte.

It is also preferable that, independent of the volume cumulative particle diameter D₅₀ of the sulfur-containing component, the volume cumulative particle diameter D₅₀ of the sulfur-free component is equal to or less than a predetermined value. The Inventor believes that this makes it easier to form an Li-P-S skeletal structure when a solid-phase reaction occurs in step (3) described below, and also increases the crystallization rate of an argyrodite-type crystal structure due to efficient replacement of the sulfur-free components, and as a result, a sulfide solid electrolyte with high ionic conduction properties can be easily produced.

Specifically, at least one of the sulfur-free components has a volume cumulative particle diameter D₅₀ of preferably 50 µm or less, more preferably 30 µm or less, and even more preferably 10 µm or less. The smaller the volume cumulative particle diameter D₅₀ of the sulfur-free component, the more preferable. On the other hand, the volume cumulative particle diameter D₅₀ may be, for example, 1.0 µm or more, 2.0 µm or more, or 3.0 µm or more.

In addition, it is preferable that at least one of the sulfur-free components has a volume cumulative particle diameter D₅₀ within the above range, and it is particularly preferable that all of the sulfur-free components have a volume cumulative particle diameter D₅₀ within the above range, because this can further improve the ionic conduction properties of the sulfide solid electrolyte.

In the production method of the present invention, it is preferable that the sulfur-containing component and the sulfur-free component each independently have a volume cumulative particle diameter D₅₀ of preferably 50 µm or less, more preferably 30 µm or less, and even more preferably 10 µm or less. From the viewpoint of improving the ionic conduction properties of the sulfide solid electrolyte, it is particularly preferable that the volume cumulative particle diameter D₅₀ of all of the sulfur-containing components and the sulfur-free components is 50 µm or less. The smaller the volume cumulative particle diameter D₅₀ of the sulfur-containing components and the sulfur-free components, the more preferable. On the other hand, the volume cumulative particle diameter D₅₀ may be, for example, 1.0 µm or more, 2.0 µm or more, or 3.0 µm or more.

The sulfur-containing components and the sulfur-free components preferably have a volume cumulative particle diameter D₅₀ equal to or less than a predetermined value, and it is also preferable that the volume cumulative particle diameters D₅₀ satisfy a predetermined relationship within the respective components. Specifically, when there are two or more types of sulfur-containing components and two or more types of sulfur-free components, it is preferable that the value of D₁ₘᵢₙ to D₁ₘₐₓ (D₁ₘᵢₙ/D₁ₘₐₓ) is, for example, preferably 0.010 or more, more preferably 0.040 or more, even more preferably 0.15 or more, and even more preferably 0.30 or more, where D₁ₘᵢₙ is defined as the volume cumulative particle diameter D₅₀ of the sulfur-containing component, among the sulfur-containing components, having the smallest volume cumulative particle diameter D₅₀, and D₁ₘₐₓ is defined as the volume cumulative particle diameter D₅₀ of the sulfur-containing component, among the sulfur-containing components, having the largest volume cumulative particle diameter D₅₀. On the other hand, D₁ₘᵢₙ/D₁ₘₐₓ may be, for example, less than 1.0, 0.90 or less, or 0.80 or less. The Inventor believes that setting D₁ₘᵢₙ/D₁ₘₐₓ within the above range makes it easier to form an Li-P-S skeletal structure when a solid-phase reaction occurs in step (3) described below, and also increases the crystallization rate of an argyrodite-type crystal structure due to efficient replacement of the sulfur-free components, and as a result, a sulfide solid electrolyte with high ionic conduction properties can be easily produced.

Regarding the sulfur-free component, specifically, it is preferable that the value of D₂ₘᵢₙ to D₂ₘₐₓ (D₂ₘᵢₙ/D₂ₘₐₓ) is preferably 0.010 or more, more preferably 0.10 or more, and even more preferably 0.30 or more, where D₂ₘᵢₙ is defined as the volume cumulative particle diameter D₅₀ of the sulfur-free component, among the sulfur-free components, having the smallest volume cumulative particle diameter D₅₀, and D₂ₘₐₓ is defined as the volume cumulative particle diameter D₅₀ of the sulfur-free component, among the sulfur-free components, having the largest volume cumulative particle diameter D₅₀. On the other hand, D₂ₘᵢₙ/D₂ₘₐₓ may be, for example, less than 1.0, 0.90 or less, or 0.70 or less. The Inventor believes that setting D₂ₘᵢₙ/D₂ₘₐₓ within the above range increases the crystallization rate of an argyrodite-type crystal structure due to efficient replacement of the sulfur-free components to a desired compositional makeup, and as a result, a sulfide solid electrolyte with high ionic conduction properties can be easily produced.

In the production method of the present invention, it is also preferable that the volume cumulative particle diameters D₅₀ of all the sulfur-containing components and sulfur-free components satisfy a predetermined relationship. Specifically, it is preferable that the value of D₅₀ₘᵢₙ to D₅₀ₘₐₓ (D₅₀ₘᵢₙ/D₅₀ₘₐₓ) is, for example, preferably 0.010 or more, more preferably 0.020 or more, even more preferably 0.10 or more, and even more preferably 0.30 or more, where D₅₀ₘᵢₙ is defined as the volume cumulative particle diameter D₅₀ of the component, among the sulfur-containing components and the sulfur-free components, having the smallest volume cumulative particle diameter D₅₀, and D₅₀ₘₐₓ is defined as the volume cumulative particle diameter D₅₀ of the component, among the sulfur-containing components and the sulfur-free components, having the largest volume cumulative particle diameter D₅₀. On the other hand, D₅₀ₘᵢₙ/D₅₀ₘₐₓ may be, for example, less than 1.0, 0.80 or less, or 0.60 or less. The Inventor believes that setting D₅₀ₘᵢₙ/D₅₀ₘₐₓ within the above range makes it easier to form an Li-P-S skeletal structure when a solid-phase reaction occurs in step (3) described below, and also increases the crystallization rate of an argyrodite-type crystal structure due to efficient replacement of the sulfur-free components, and as a result, a sulfide solid electrolyte with high ionic conduction properties can be easily produced.

In order to set D₁ₘᵢₙ/D₁ₘₐₓ, D₂ₘᵢₙ/D₂ₘₐₓ and D₅₀ₘᵢₙ/D₅₀ₘₐₓ within the above ranges, for example, a sulfur-containing component and a sulfur-free component having a predetermined particle diameter may be used in combination, or the particle diameter of the sulfur-containing component and the sulfur-free component may be adjusted by pulverization and then combined, or a sulfur-containing component having a predetermined particle diameter and a sulfur-free component having a predetermined particle diameter may be synthesized and used in combination.

### Step (2):

When the sulfur-containing component and the sulfur-free component are prepared, they are mixed to prepare a raw material composition. This raw material composition contains one or more sulfur-containing components and one or more sulfur-free components. The amounts of the sulfur-containing component(s) and the sulfur-free component(s) used can be appropriately set so as to achieve the intended compositional makeup of the sulfide solid electrolyte, which is the object of the production method of the present invention. A known mixing device can be used for mixing. For example, a mixing device such as a ball mill, a bead mill, or a paint shaker can be used. These devices may be of the rotating type, or may be of the rotating-and-revolving type.

The mixing of the sulfur-containing component and the sulfur-free component may be performed in a dry or wet manner. As a liquid medium to be used in wet mixing, for example, various organic solvents can be used. Specific examples include linear saturated aliphatic hydrocarbons, such as hexane, heptane, and decane; cyclic saturated aliphatic hydrocarbons, such as cyclohexane; and aromatic hydrocarbons, such as benzene and toluene.

In the production method of the present invention, dry mixing can be adopted from the viewpoint of omitting a drying step in post-treatment.

The sulfur-containing component and the sulfur-free component are preferably mixed under conditions that do not cause pulverization of the sulfur-containing component and the sulfur-free component before mixing, i.e., under conditions that cause no substantial change in particle diameter between before and after mixing of the sulfur-containing component and the sulfur-free component, because this makes it easier to obtain a sulfide solid electrolyte with high ionic conduction properties.

### Step (3):

In this step, the raw material composition prepared in step (2) is fired to obtain a fired product. This fired product is the intended sulfide solid electrolyte. The firing is preferably performed by drying the raw material composition as necessary, followed by crushing and classification, under an inert gas atmosphere or hydrogen sulfide (H₂S) gas flow. By setting the firing temperature to preferably 350°C or higher, sulfur defects can be suppressed. In addition, by setting the firing temperature to 350°C or higher, it is possible to suppress unreacted sulfur-containing components and sulfur-free components from remaining in the solid electrolyte, and to suppress deterioration in ionic conduction properties.

When hydrogen sulfide gas is used as the firing atmosphere, sulfur gas generated by decomposition of hydrogen sulfide during firing increases the sulfur partial pressure of the atmosphere. As a result, even when the firing temperature is set high, sulfur defects are less likely to occur in the resulting solid electrolyte, thereby suppressing the development of electronic conductivity. A specific firing temperature is, for example, preferably 350°C or higher, and more preferably 450°C or higher. On the other hand, the firing temperature is, for example, preferably 650°C or lower, more preferably 600°C or lower, and even more preferably 500°C or lower.

When an inert gas is used as the firing atmosphere, setting the firing temperature high tends to make it easier for sulfur defects to form in the resulting solid electrolyte. From this perspective, the firing temperature is, for example, preferably 350°C or higher, and more preferably 400°C or higher. On the other hand, the firing temperature is, for example, preferably 600°C or lower, and more preferably 550°C or lower.

Regardless of the firing atmosphere, the firing time is, for example, preferably 1 hour or more, more preferably 2 hours or more, and even more preferably 3 hours or more, while the firing time is, for example, preferably 10 hours or less, more preferably 8 hours or less, and even more preferably 6 hours or less.

From the viewpoint of eliminating unreacted phases due to uneven heating, the temperature increasing rate during firing is, for example, preferably 250°C/h or less, more preferably 200°C/h or less, and even more preferably 150°C/h or less. On the other hand, the temperature increasing rate is, for example, preferably 50°C/h or more, and even more preferably 80°C/h or more. By keeping the temperature increasing rate within the above range, firing efficiency can be maintained.

The fired product thus obtained, i.e., the sulfide solid electrolyte, may include, for example, Li₂S-P₂S₅, Li₂S-P₂S₅-LiX (wherein "X" represents one or more halogen elements), Li₂S-P₂S₅-P₂O₅, Li₂S-Li₃PO₄-P₂S₅, Li₃PS₄, Li₄P₂S₆, Li₁₀GeP₂S₁₂, Li_{3.25}Ge_{0.25}P_{0.75}S₄, Li₇P₃S₁₁, Li_{3.25}P_{0.95}S₄, Li₇₋ₓPS₆₋ₓXₓ (wherein "X" represents one or more halogen elements, and 0.2<x<2.0 or 0.2<x<1.8). Among these sulfide solid electrolytes, it is preferable to produce a solid electrolyte including a crystal phase having an argyrodite-type crystal structure, from the viewpoint of particularly high lithium-ion conduction properties.

### Step (4):

In this step, the fired product obtained in step (3) is pulverized. This makes it possible to more easily obtain a solid-state battery using the fired product (i.e., sulfide solid electrolyte) after pulverization. The pulverization may be performed in a dry or wet manner. Dry pulverization and wet pulverization can be performed by the above-mentioned method. From the viewpoint of increasing the packing properties and increasing the lithium-ion conduction properties, it is preferable to perform dry pulverization.

After pulverization, the resulting pulverized product may be classified as necessary. Classification can be performed, for example, by passing it through a 20 µm sieve.

The sulfide solid electrolyte thus obtained has lithium-ion conduction properties in a solid state. The lithium-ion conductivity of the solid electrolyte is, for example, preferably 2.0 mS/cm or more, more preferably 2.2 mS/cm or more, and even more preferably 2.4 mS/cm or more, preferably at room temperature, i.e., 25°C. The lithium-ion conductivity can be measured using the method described in the Examples below.

The sulfide solid electrolyte produced by the method of the present invention can be used as a material for forming a solid electrolyte layer, a positive electrode layer, or a negative electrode layer. Specifically, the sulfide solid electrolyte produced by the method of the present invention can be used in a battery having a positive electrode layer, a negative electrode layer, and a solid electrolyte layer between the positive electrode layer and the negative electrode layer. In other words, the sulfide solid electrolyte produced by the method of the present invention can be used in so-called solid-state batteries. More specifically, it can be used in solid-state lithium batteries. The solid-state lithium battery may be a primary battery or a secondary battery. There is no particular restriction on the shape of the battery, and for example, a laminate type, a cylindrical type, a square type, or other shape can be adopted. The term "solid-state battery" encompasses solid-state batteries that do not contain any liquid or gel-like substance as an electrolyte, as well as embodiments that contain, for example, 50 mass% or less, 30 mass% or less, or 10 mass% or less of a liquid or gel-like substance as an electrolyte.

When the solid electrolyte layer contains the sulfide solid electrolyte produced by the method of the present invention, the solid electrolyte layer can be produced, for example, by a method of dropping a slurry containing the sulfide solid electrolyte, a binder, and a solvent onto a substrate and scraping it off with a doctor blade or the like, a method of contacting the substrate with the slurry and then cutting it with an air knife, a method of forming a coating film by a screen printing method or the like and then removing the solvent by heating and drying, etc. Alternatively, the solid electrolyte layer can also be produced by forming a powdered sulfide solid electrolyte into a compact by pressing or the like and then appropriately processing it.

From the viewpoint of the balance between short circuit prevention and volumetric capacity density, the thickness of the solid electrolyte layer is typically preferably from 5 to 300 µm, and more preferably from 10 to 100 µm.

The sulfide solid electrolyte produced by the method of the present invention may be used together with an active material to form an electrode mixture. The proportion of the sulfide solid electrolyte in the electrode mixture is typically from 10 to 50 mass%. The electrode mixture may contain other materials, such as conductive additives and binders, as necessary. The electrode mixture is mixed with a solvent to prepare a paste, which is then applied to a charge collector, such as aluminum foil, and dried, to prepare a positive electrode layer and a negative electrode layer.

As a positive electrode material constituting the positive electrode layer, a positive electrode material used as a positive electrode active material in a lithium-ion battery can be used as appropriate. Examples may include lithium-containing positive electrode active materials, more specifically, a spinel-type lithium transition metal oxide and a lithium metal oxide having a layered structure. By using a high-voltage positive electrode material as the positive electrode material, it is possible to improve the energy density. In addition to the positive electrode active material, the positive electrode material may contain an electroconductive material or other materials.

As a negative electrode material constituting the negative electrode layer, a negative electrode material used as a negative electrode active material in a lithium-ion battery can be used as appropriate. Since the sulfide solid electrolyte produced by the method of the present invention is electrochemically stable, lithium metal, or carbon-based materials such as graphite, artificial graphite, natural graphite, and non-graphitizable carbon (hard carbon) which are materials that are charged and discharged at a low potential (about 0.1 V vs. Li⁺/Li) comparable to that of lithium metal, can be used as the negative electrode material. This can significantly improve the energy density of the solid-state battery. In addition, silicon or tin, which are promising high-capacity materials, can also be used as the active material.

The present invention has been described above based on preferred embodiments, but the present invention is not limited to the foregoing embodiments.

In relation to the foregoing embodiments, the following method for producing a sulfide solid electrolyte is further disclosed.
[1] A method for producing a sulfide solid electrolyte by using a raw material composition containing lithium (Li), phosphorus (P) and sulfur (S) elements, wherein:
   the raw material composition contains
      one or more sulfur-containing components containing sulfur (S) element, and
      one or more sulfur-free components not containing sulfur (S) element;
   D₁ is equal to or less than 5.0×D₂, where
   D₁ is a volume cumulative particle diameter D₅₀ at a cumulative volume of 50 vol% of at least one of the sulfur-containing components, the volume cumulative particle diameter D₅₀ of the sulfur-containing component being measured by a laser diffraction/scattering particle size distribution measurement method, and
   D₂ is a volume cumulative particle diameter D₅₀ at a cumulative volume of 50 vol% of at least one of the sulfur-free components, the volume cumulative particle diameter D₅₀ of the sulfur-free component being measured by a laser diffraction/scattering particle size distribution measurement method; and
   the volume cumulative particle diameter D₅₀ of at least one of the sulfur-containing components is 50 µm or less.
[2] The method as set forth in clause [1], wherein the volume cumulative particle diameter D₅₀ of the sulfur-containing component and the volume cumulative particle diameter D₅₀ of the sulfur-free component are each independently 50 µm or less.
[3] The method as set forth in clause [1] or [2], wherein a ratio of D₁ₘᵢₙ to D₁ₘₐₓ is 0.010 or greater, where
   D₁ₘᵢₙ is a volume cumulative particle diameter D₅₀ of a sulfur-containing component, among the sulfur-containing components, having a smallest volume cumulative particle diameter D₅₀, and
   D₁ₘₐₓ is a volume cumulative particle diameter D₅₀ of a sulfur-containing component, among the sulfur-containing components, having a largest volume cumulative particle diameter D₅₀.
[4] The method as set forth in any one of clauses [1] to [3], wherein a ratio of D₂ₘᵢₙ to D₂ₘₐₓ is 0.010 or greater, where
   D₂ₘᵢₙ is a volume cumulative particle diameter D₅₀ of a sulfur-free component, among the sulfur-free components, having a smallest volume cumulative particle diameter D₅₀, and
   D₂ₘₐₓ is a volume cumulative particle diameter D₅₀ of a sulfur-free component, among the sulfur-free components, having a largest volume cumulative particle diameter D₅₀.
[5] The method as set forth in any one of clauses [1] to [4], wherein a ratio of D₅₀ₘᵢₙ to D₅₀ₘₐₓ is 0.010 or greater, where
   D₅₀ₘᵢₙ is a volume cumulative particle diameter D₅₀ of a component, among the sulfur-containing components and the sulfur-free components, having a smallest volume cumulative particle diameter D₅₀, and
   D₅₀ₘₐₓ is a volume cumulative particle diameter D₅₀ of a component, among the sulfur-containing components and the sulfur-free components, having a largest volume cumulative particle diameter D₅₀.
[6] The method as set forth in any one of clauses [1] to [5], comprising firing the raw material composition to obtain a fired product.
[7] The method as set forth in clause [6], comprising pulverizing the fired product.
[8] The method as set forth in clause [6] or [7], wherein the fired product includes a crystal phase having an argyrodite-type crystal structure.

### Examples

The present invention will be described in more detail below with reference to examples. Note, however, that the scope of the present invention is not limited to the following examples. Unless otherwise specified, "%" means "% by mass (mass%)."

### [Example 1]

Step (1): As the sulfur-containing components, Li₂S powder and P₂S₅ powder were prepared. As the sulfur-free components, LiCl powder and LiBr powder were prepared. The volume cumulative particle diameter D₅₀ of these powders is as shown in Table 1. The volume cumulative particle diameter D₅₀ of Li₂S was from 2 to 5 µm. It should be noted that Table 1 shows the relative values of the P₂S₅ powder, the LiCl powder, and the LiBr powder when the volume cumulative particle diameter D₅₀ of the Li₂S powder is defined as 1.

Step (2): Each powder after pulverization was weighed so as to obtain a sulfide solid electrolyte having a composition formula of Li_{5.4}PS_{4.4}Cl_{0.8}Br_{0.8}, and then the powders were dry-mixed using a ball mill, to prepare a raw material composition.

Step (3): The raw material composition was fired, to obtain a fired product made of a sulfide solid electrolyte. The firing was performed using a tubular electric furnace. Nitrogen gas with a purity of 100% was circulated in the electric furnace during firing. The firing temperature was set to 500°C. As a result of XRD measurement, it was confirmed that the fired product included a crystal phase having an argyrodite-type crystal structure.

Step (4): The fired product was pulverized with a mortar and pestle and passed through a 20 µm sieve, to obtain the intended sulfide solid electrolyte.

### [Examples 2 to 5 and Comparative Examples 1 and 2]

The intended sulfide solid electrolytes were obtained in the same manner as in Example 1, except that powders each having a volume cumulative particle diameter D₅₀ shown in Table 1 were used in Example 1.

In Examples 2 and 3, the volume cumulative particle diameter D₅₀ of the Li₂S after pulverization was from 10 to 20 µm.

In Examples 4 and 5, the volume cumulative particle diameter D₅₀ of the Li₂S after pulverization was from 2 to 5 µm.

In Comparative Examples 1 and 2, the volume cumulative particle diameter D₅₀ of the Li₂S after pulverization was more than 50 µm.

### [Evaluation]

In the Examples and Comparative Examples, the volume cumulative particle diameter D₅₀ of each powder used in the preparation of the raw material composition was measured by the following method. In addition, the value obtained by dividing the volume cumulative particle diameter D₁ of the sulfur-containing component by the volume cumulative particle diameter D₂ of the sulfur-free component is shown in Table 2.

Further, the lithium-ion conductivity of the sulfide solid electrolytes obtained in the Examples and Comparative Examples was measured by the following method.

### [Volume Cumulative Particle Diameter D₅₀]

The particle size distribution of the sulfide solid electrolyte was measured by a laser diffraction/scattering particle size distribution measurement method according to the following procedure. Using an automatic sample delivery device ("Microtorac SDC" manufactured by MicrotracBEL Corp.) for a laser diffraction particle diameter distribution measurement device, the flow rate of the measurement sample containing the sulfide solid electrolyte was set to 50%, and the measurement sample was irradiated with 30 W ultrasonic waves for 60 seconds. Thereafter, the particle size distribution was measured using a laser diffraction particle size distribution measurement device "MT3300EXII" manufactured by MicrotracBEL Corp., and the particle diameter at which the cumulative volume reached 50 vol% was obtained from the obtained volume-based particle size distribution chart, and each was taken as the volume cumulative particle diameter D₅₀. In measuring the volume cumulative particle diameter D₅₀, an organic solvent was passed through a 60 µm filter, the solvent refractive index was 1.50, the particle transparency condition was "transparent", the particle refractive index was 1.59, the shape was "non-spherical", the measurement range was from 0.133 µm to 704.0 µm, and the measurement time was 10 seconds. The measurement was performed twice, and the average value of the obtained measured values was taken as the volume cumulative particle diameter D₅₀.

The measurement sample containing the sulfide solid electrolyte was prepared as follows. First, 0.3 g of the sulfide solid electrolyte and 5.7 g of a dispersant-containing liquid (mass of toluene to mass of dispersant (SN Dispersant 9228 manufactured by San Nopco Ltd.) = 19:1 (mass ratio)) were mixed by hand, to prepare a slurry containing the sulfide solid electrolyte. Next, 6 ml of the slurry containing the sulfide solid electrolyte was poured into an organic solvent (toluene), to prepare a measurement sample containing the sulfide solid electrolyte.

### [Lithium-Ion Conductivity]

The sulfide solid electrolyte powder obtained in the Examples and Comparative Examples was each uniaxially pressed and shaped under a load of about 6 t/cm² in a glovebox purged with sufficiently dried Ar gas (dew point: -60°C or lower), to produce a sample for measuring lithium-ion conductivity composed of a pellet with a diameter of 10 mm and a thickness of about 1 to 8 mm. The lithium-ion conductivity was measured using a Solartron 1255B electrochemical measurement system (1280C) and an impedance/gain phase analyzer (SI1260) manufactured by Solartron Analytical. The measurement was carried out using an AC impedance method under conditions of a temperature of 25°C, a frequency of 100 Hz to 1 MHz, and an amplitude of 100 mV.

**[Table 1]**

| | | | Example 1 | Example 2 | Example 3 | Example 4 | Example 5 | Comparative Example 1 | Comparative Example 2 |
|---|---|---|---|---|---|---|---|---|---|
| Sulfur-containing component | Particle diameter (relative value) | Li₂S | 1.00 | 1.00 | 1.00 | 1.00 | 1.00 | 1.00 | 1.00 |
| | | P₂S₅ | 1.83 | 0.880 | 0.880 | 1.09 | 1.09 | 1.02 | 1.02 |
| | D₁ₘᵢₙ/D₁ₘₐₓ | | 0.55 | 0.88 | 0.88 | 0.92 | 0.92 | 0.98 | 0.98 |
| Sulfur-free component | Particle diameter (relative value) | LiCl | 3.13 | 1.00 | 4.25 | 6.96 | 29.6 | 1.15 | 0.0590 |
| | | LiBr | 1.17 | 0.620 | 5.25 | 4.30 | 36.5 | 1.42 | 0.0580 |
| | D₂ₘᵢₙ/D₂ₘₐₓ | | 0.38 | 0.62 | 0.81 | 0.62 | 0.81 | 0.81 | 0.97 |
| D₅₀ₘᵢₙ/D₅₀ₘₐₓ | | | 0.32 | 0.62 | 0.17 | 0.14 | 0.027 | 0.70 | 0.057 |
| Sulfide solid electrolyte | Volume cumulative particle diameter D₅₀ (µm) | | 6.1 | 9.7 | 7.7 | 15.5 | 10.4 | 11.2 | 12.4 |
| | Lithium-ion conductivity (mS/cm) | | 5.6 | 4.7 | 3.0 | 2.5 | 3.2 | 1.9 | 1.9 |

**[Table 2]**

| Example 1 | | | | Example 2 | | | | Example 3 | | | |
|---|---|---|---|---|---|---|---|---|---|---|---|
| | | LiCl | D₂ LiBr | | | LiCl D₂ | LiBr | | | LiCl D₂ | LiBr |
| D₁ | Li₂S | 0.32 | 0.85 | D₁ | Li₂S | 1.00 | 1.61 | D₁ | Li₂S | 0.24 | 0.19 |
| | P₂S₅ | 0.58 | 1.56 | | P₂S₅ | 0.88 | 1.41 | | P₂S₅ | 0.88 | 0.17 |

| Example 4 | | | | Example 5 | | | | | | | |
|---|---|---|---|---|---|---|---|---|---|---|---|
| | | LiCl | D₂ LiBr | | | LiCl D₂ | LiBr | | | | |
| D₁ | Li₂S | 0.14 | 0.23 | D₁ | Li₂S | 0.034 | 0.027 | | | | |
| | P₂S₅ | 0.16 | 0.25 | | P₂S₅ | 0.037 | 0.030 | | | | |

| Comparative Example 1 | | D₂ | | Comparative Example 2 | | D₂ | | | | | |
|---|---|---|---|---|---|---|---|---|---|---|---|
| | | LiCl | LiBr | | | LiCl | LiBr | | | | |
| D₁ | Li₂S | 0.87 | 0.70 | D₁ | Li₂S | 16.86 | 17.35 | | | | |
| | P₂S₅ | 0.88 | 0.71 | | P₂S₅ | 17.14 | 17.65 | | | | |

As is clear from the results shown in Tables 1 and 2, it can be seen that Examples 1 to 5 have higher lithium-ion conductivity than Comparative Examples 1 and 2. Generally, the larger the volume cumulative particle diameter D₅₀ of a sulfide solid electrolyte, the higher the lithium-ion conductivity. However, even in the Examples having a smaller volume cumulative particle diameter D₅₀ than Comparative Examples 1 and 2, the lithium-ion conductivity is high. This shows that the production method of the present invention can provide a sulfide solid electrolyte with high lithium-ion conduction properties.

### Industrial Applicability

The method of the present invention can facilitate production of a sulfide solid electrolyte with high ionic conduction properties.

## Claims

1. A method for producing a sulfide solid electrolyte by using a raw material composition containing lithium (Li), phosphorus (P) and sulfur (S) elements, wherein:
the raw material composition contains
one or more sulfur-containing components containing sulfur (S) element, and
one or more sulfur-free components not containing sulfur (S) element;
D₁ is equal to or less than 5.0×D₂, where
D₁ is a volume cumulative particle diameter D₅₀ at a cumulative volume of 50 vol% of at least one of the sulfur-containing components, the volume cumulative particle diameter D₅₀ of the sulfur-containing component being measured by a laser diffraction/scattering particle size distribution measurement method, and
D₂ is a volume cumulative particle diameter D₅₀ at a cumulative volume of 50 vol% of at least one of the sulfur-free components, the volume cumulative particle diameter D₅₀ of the sulfur-free component being measured by a laser diffraction/scattering particle size distribution measurement method; and
the volume cumulative particle diameter D₅₀ of at least one of the sulfur-containing components is 50 µm or less.

2. The method according to claim 1, wherein the volume cumulative particle diameter D₅₀ of the sulfur-containing component and the volume cumulative particle diameter D₅₀ of the sulfur-free component are each independently 50 µm or less.

3. The method according to claim 1, wherein a ratio of D₁ₘᵢₙ to D₁ₘₐₓ is 0.010 or greater, where
D₁ₘᵢₙ is a volume cumulative particle diameter D₅₀ of a sulfur-containing component, among the sulfur-containing components, having a smallest volume cumulative particle diameter D₅₀, and
D₁ₘₐₓ is a volume cumulative particle diameter D₅₀ of a sulfur-containing component, among the sulfur-containing components, having a largest volume cumulative particle diameter D₅₀.

4. The method according to claim 1, wherein a ratio of D₂ₘᵢₙ to D₂ₘₐₓ is 0.010 or greater, where
D₂ₘᵢₙ is a volume cumulative particle diameter D₅₀ of a sulfur-free component, among the sulfur-free components, having a smallest volume cumulative particle diameter D₅₀, and
D₂ₘₐₓ is a volume cumulative particle diameter D₅₀ of a sulfur-free component, among the sulfur-free components, having a largest volume cumulative particle diameter D₅₀.

5. The method according to claim 1, wherein a ratio of D₅₀ₘᵢₙ to D₅₀ₘₐₓ is 0.010 or greater, where
D₅₀ₘᵢₙ is a volume cumulative particle diameter D₅₀ of a component, among the sulfur-containing components and the sulfur-free components, having a smallest volume cumulative particle diameter D₅₀, and
D₅₀ₘₐₓ is a volume cumulative particle diameter D₅₀ of a component, among the sulfur-containing components and the sulfur-free components, having a largest volume cumulative particle diameter D₅₀.

6. The method according to claim 1, comprising firing the raw material composition to obtain a fired product.

7. The method according to claim 6, comprising pulverizing the fired product.

8. The method according to claim 6 or 7, wherein the fired product includes a crystal phase having an argyrodite-type crystal structure.
